# EUROPÄISCHE PATENTSCHRIFT

(11) **EP 4 423 884 B1**
(45) Veröffentlichungstag und Bekanntmachung des Hinweises auf die Patenterteilung: **19.03.2025**
(21) Anmeldenummer: 22758165.9
(22) Anmeldetag: 27.07.2022
(51) Int. Cl.: H02K 9/19, H02K 9/197, H02K 1/32, H02K 7/116

(54) **KÜHLMITTELVERSORGUNGSSYSTEM FÜR EINE ELEKTRISCH BETRIEBENE FAHRZEUGACHSE**
COOLANT SUPPLY SYSTEM FOR AN ELECTRICALLY OPERATED VEHICLE AXLE
SYSTÈME D'ALIMENTATION EN LIQUIDE DE REFROIDISSEMENT POUR ESSIEU DE VÉHICULE À COMMANDE ÉLECTRIQUE

(30) Priorität: 28.10.2021 DE 102021128067
(43) Veröffentlichungstag der Anmeldung: 04.09.2024
(73) Patentinhaber: Audi AG, 85045 Ingolstadt (DE)
(72) Erfinder: WEBER, Andreas, 85055 Ingolstadt (DE); GREITER, Ivo, 85117 Eitensheim (DE); GLOEDE, Harald, 85104 Pförring (DE); TSCHENTSCHER, Herbert, 93339 Riedenburg (DE); ROETHLINGSHOEFER, Frank, 85055 Ingolstadt (DE)
(74) Vertreter: Bierschneider, Walter
(86) Internationale Anmeldenummer: PCT/EP2022/071064
(87) Internationale Veröffentlichungsnummer: WO 2023/072445

(56) Entgegenhaltungen:
- EP-B1- 3 411 941
- WO-A1-2015/174212
- CA-A1- 2 116 900
- CN-A- 109 997 296
- CN-A- 112 271 876
- DE-T5- 112011 103 349
- US-A1- 2014 265 658
- US-A1- 2021 159 761

## Beschreibung

Die Erfindung betrifft ein Kühlmittelversorgungssystem für eine Antriebsvorrichtung einer elektrisch betriebenen Fahrzeugachse eines zweispurigen Fahrzeugs nach dem Oberbegriff des Anspruches 1 oder nach dem Oberbegriff des Anspruches 10.

Bei einem elektrisch betriebenen, zweispurigen Fahrzeug kann beispielhaft eine elektrisch angetriebene Fahrzeugachse eine Elektromaschine aufweisen. Diese kann achsparallel zu den, zu den Fahrzeugrädern geführten Flanschwellen angeordnet sein. In diesem Fall kann die Elektromaschine über eine einfache oder doppelte Stirnrad-Getriebestufe auf ein Achsdifferenzial und weiter auf die zu den Fahrzeugrädern geführten Flanschwellen der Fahrzeug-Fahrzeugachse abtreiben.

Eine solche Elektromaschine kann als eine nasslaufende Elektromaschine realisiert sein, die ein zylindrisches Statorgehäuse aufweist. In dem Statorgehäuse ist eine Stator-/Rotor-Anordnung eingebaut. Axial beidseitig der Stator-/Rotor-Anordnung befindet sich ein Wickelkopfraum, an dessen Boden sich Kühlmittel sammelt, das in einen Kühlmittelsumpf abläuft. Die beiden Wickelräume sind über den Kühlmittelsumpf miteinander strömungstechnisch verbunden.

Im Stand der Technik ist der Kühlmittelsumpf in vertikaler Flucht unterhalb der Rotorachse am tiefsten Punkt zentral angeordnet. Der Kühlmittelsumpf erstreckt sich im Wesentlichen über die gesamte Statorgehäuse-Axiallänge. Eine solche Statorgehäuse-Geometrie ist im Hinblick auf eine Package-Optimierung problematisch, da sich die Statorgehäuse-Bauhöhe und die Kühlmittelsumpf-Bauhöhe zu einer vergleichsweise großen Gesamt-Bauhöhe aufaddieren. Eine Reduzierung der Gesamt-Bauhöhe durch eine Verringerung des Kühlmittelsumpf-Strömungsquerschnitts ist im Hinblick auf die Kühlmittelsumpf-Funktionsfähigkeit nicht möglich. Zudem ist eine solche Verringerung des Kühlmittelsumpf-Strömungsquerschnitts aus fertigungstechnischer (das heißt gusstechnischer) Sicht nicht ohne weiteres möglichdurchführbar.

Aus der DE 10 2019 114 476 A1 ist eine Ölwanne mit zweigeteiltem Sammelraum bekannt. Aus der DE 2 139 740 A ist eine Ölwanne für einen Motor bekannt. Aus der DE 10 2008 040 691 A1 ist ein Getriebeölraum bekannt.

Die CN 112 271 876 A offenbart ein Kühlmittelversorgungssystem. Aus der DE 11 2011 103349 T5 sind ein Kühlmittel-Ablasssystem und ein Verfahren für eine elektrische Maschine bekannt. Die EP 3 411 941 B1 offenbart eine Kühlvorrichtung für eine elektrische Maschine. Aus der CN 109 997 296 A sind ein Rotor, eine elektrische Maschine und ein Verfahren zur Herstellung eines Rotors bekannt. Die CA 2 116 900 A1 offenbart ein gattungsgemäßes Kühlmittelversorgungssystem.

Die Aufgabe der Erfindung besteht darin, ein Kühlmittelversorgungssystem für eine Antriebsvorrichtung einer elektrisch betriebenen Fahrzeugachse eines zweispurigen Fahrzeugs bereitzustellen, das im Vergleich zum Stand der Technik einen reduzierten Bauraumbedarf in der Elektromaschinen-Hochrichtung aufweist.

Die Aufgabe ist durch die Merkmale der unabhängigen Ansprüche gelöst. Bevorzugte Weiterbildungen der Erfindung sind in den Unteransprüchen offenbart.

Die Erfindung geht von einem Kühlmittelversorgungssystem für eine Antriebsvorrichtung einer elektrisch betriebenen Fahrzeugachse eines zweispurigen Fahrzeugs aus. Die Antriebsvorrichtung weist eine nasslaufende Elektromaschine auf. Die einem zylindrischen Statorgehäuse der Elektromaschine ist eine Rotor-/Stator-Anordnung eingebaut. Beidseitig dieser Rotor-/Stator-Anordnung befindet sich jeweils ein Wickelkopfraum. An dessen Boden sammelt sich Kühlmittel, das in einen Kühlmittelsumpf abläuft. Die beiden Wickelkopfräume sind über den Kühlmittelsumpf miteinander strömungstechnisch verbunden. Gemäß dem kennzeichnenden Teil des Anspruches 1 wird die Gesamt-Bauhöhe der Elektromaschine wie folgt reduziert: so ist der Kühlmittelsumpf um einen Querversatz von einer Rotorachsen-Vertikalebene versetzt positioniert. Auf diese Weise kann sich die Statorgehäuse-Bauhöhe und die Kühlmittelsumpf-Bauhöhe in der Elektromaschinen-Hochrichtung um ein Überlappmaß zumindest teilweise überlagern. Im Vergleich zum Stand der Technik wird somit die Gesamt-Bauhöhe der Elektromaschine um das Überlappmaß reduziert.

Der Kühlmittelsumpf kann sich in der Statorgehäuse-Axialrichtung durchgängig über die gesamte Statorgehäuse-Axiallänge erstrecken. Zudem ist der Kühlmittelsumpf im Hinblick auf unterschiedliche Fahrbetriebszustände, zum Beispiel einer Beschleunigungsfahrt, einer Kurvenfahrt, einer Bergauf- oder Bergabfahrt wie folgt gestaltet: So ist der Kühlmittelsumpf erfindungsgemäß aufgeteilt in zwei Schwappkanäle. Diese sind jeweils mit Querversatz versetzt beidseitig der Rotorachsen-Vertikalebene angeordnet.

Die Elektromaschine ist erfindungsgemäß im Quereinbau achsparallel zur Fahrzeugachse verbaut. In diesem Fall kann insbesondere eine erste Absaugstelle auf einer linken Fahrzeugseite positioniert sein, während eine zweite Absaugstelle auf der rechten Fahrzeugseite positioniert sein kann. Bei einer Fahrzeug-Kurvenfahrt nach links verlagert sich daher das Kühlmittel im Kühlmittelsumpf (bzw. in den Schwappkanälen) fliehkraftbedingt in Richtung der rechten Absaugstelle. Im Gegensatz dazu verlagert sich bei einer Kurvenfahrt nach rechts das Kühlmittel im Kühlmittelsumpf (bzw. in den Schwappkanälen) fliehkraftbedingt in Richtung der linken Absaugstelle. Von daher kann das Kühlmittel bei Kurvenfahrten betriebssicher entweder von der ersten Absaugstelle oder von der zweiten Absaugstelle in den Kühlmitteltank rückgeführt werden.

Durch die beiden Schwappkanäle ist zudem eine betriebssichere Kühlmittel-Umwälzung bei einer Fahrzeug-Bergauffahrt bzw. einer Fahrzeug-Bergabfahrt gewährleistet. In der Bergauffahrt gewährleistet der in Fahrtrichtung hintere Schwappkanal eine strömungstechnische Verbindung zwischen den Wickelkopfräumen. In der Bergabfahrt gewährleistet der in der Fahrtrichtung vordere Schwappkanal eine strömungstechnische Verbindung zwischen den Wickelkopfräumen.

In der Fahrzeugachse kann die Elektromaschine über eine einfache oder doppelte Stirnrad-Getriebestufe auf ein Achsdifferential und von dort weiter auf die zu den Fahrzeugrädern geführten Flanschwellen der Fahrzeugachse abtreiben. In diesem Fall ist es bevorzugt, wenn das Kühlmittelversorgungssystem zusätzlich einen Getriebe-Hydraulikkreis aufweist. In dem Getriebe-Hydraulikkreis kann der Kühlmitteltank, der Getriebe-Innenraum und ein am Getriebeboden ausgebildeter Getriebe-Sumpf eingebunden sein. Im Getriebe-Sumpf wird das von Getriebekomponenten ablaufende Kühlmittel an einer Getriebe-Absaugstelle gesammelt und von dort mit Hilfe einer Getriebe-Rückführpumpe in den Kühlmitteltank rückgeführt. Das Getriebe kann unmittelbar an einer der Statorgehäuse-Axialseiten der Elektromaschine angeflanscht sein, so dass das Statorgehäuse mit dem Getriebegehäuse axial verlängert ist.

In einer bevorzugten Ausführungsvariante kann eine getriebenahe Stirnwand des Statorgehäuses einen Kühlmittel-Durchtritt aufweisen. Dieser verbindet den getriebenahen Wickelkopfraum mit dem Getriebe-Sumpf. Der Kühlmittel-Durchtritt kann beispielhaft in Vertikalflucht zur Rotorachse positioniert sein. Auf diese Weise kann die getriebeseitige Absaugstelle in Doppelfunktion nicht nur das sich im Getriebe-Sumpf sammelnde Kühlmittel, sondern auch das vom Statorgehäuse übergeleitete Kühlmittel absaugen.

Im Hinblick auf eine einwandfreie Strömungsverbindung zwischen den beiden voneinander axial beabstandeten Wickelkopfräumen ist es bevorzugt, wenn die Schwappkanäle jeweils an Kühlmittel-Durchtritten mit dem jeweiligen Wickelkopfraum verbunden sind. Zudem ist es bevorzugt, wenn zumindest einer der beiden Schwappkanäle über eine Kanalöffnung mit dem Getriebe-Sumpf verbunden ist.

In einer besonders bevorzugten Ausführungsvariante können die beiden Absaugstellen in einer nachfolgend beschriebenen Diagonalanordnung positioniert sein. In diesem Fall kann die getriebeseitige Absaugstelle zusammen mit der Kanalöffnung ausgebildeten Schwappkanal mit Bezug auf die Rotorachsen-Vertikalebene auf einer gemeinsamen Seite positioniert sein. Demgegenüber kann die getriebeferne Absaugstelle sowie der nicht mit dem Getriebe-Sumpf verbundene Schwappkanal auf der gegenüberliegenden Seite der Rotorachsen-Vertikalebene angeordnet sein. Bevorzugt kann jeder der beiden Absaugstellen jeweils eine Rückführpumpe zugeordnet sein. In einer bauraumgünstigen Ausführungsvariante können die Rückführpumpen an einer gemeinsamen Statorgehäuse-Axialseite angeordnet sein, und zwar insbesondere zusammen mit dem Getriebe. Die an einer pumpenfernen bzw. getriebefernen Statorgehäuse-Axialseite angeordnete Absaugstelle kann in diesem Fall über eine Rückführleitung mit einer Elektromaschinen-Rückführpumpe verbunden sein. Das Statorgehäuse kann als ein Gussteil realisiert sein, an dem die Schwappkanäle sowie die Rückführleitung und der später beschriebene Querkanal materialeinheitlich sowie einstückig angeformt sind. Die Rückführleitung sowie die beiden Schwappkanäle können sich achsparallel zur Rotorachse erstrecken.

An einer der Statorgehäuse-Axialseiten, insbesondere an der getriebefernen Statorgehäuse-Axialseite, kann ein Querkanal ausgebildet sein. In den Querkanal münden die beiden Schwappkanäle sowie bevorzugt die Rückführleitung. Der Querkanal kann eine Strömungsverbindung zwischen den beiden Schwappkanälen und dem Wickelkopfraum herstellen.

Hierzu ist der Querkanal an einem Kühlmittel-Durchtritt mit dem Wickelkopfraum verbunden. In Doppelfunktion kann der Querkanal nicht nur eine Strömungsverbindung bereitstellen, sondern zusätzlich auch als Aufnahmeraum wirken, in dem ein Siebelement einsetzbar ist, das das durchlaufende Kühlmittel filtert.

Erfindungsgemäß ist außerdem ein Kühlmittelversorgungssystem für eine Antriebsvorrichtung einer elektrisch betriebenen Fahrzeugachse mit einer Elektromaschine, die ein zylindrisches Statorgehäuse aufweist, in dem sich axial beidseitig einer Rotor-/Stator-Anordnung ein Wickelkopfraum befindet, an dessen Boden sich Kühlmittel sammelt, wobei die beiden Wickelkopfräume über einen Kühlmittelsumpf miteinander strömungstechnisch verbunden sind, und wobei sich die Statorgehäuse-Bauhöhe sowie die Kühlmittelsumpf-Bauhöhe in der Elektromaschinen-Hochrichtung zu einer Gesamt-Bauhöhe aufaddieren, und wobei zur Reduzierung der Gesamt-Bauhöhe der Kühlmittelsumpf um einen Querversatz von einer Rotorachsen-Vertikalebene versetzt ist, so dass sich die Statorgehäuse-Bauhöhe und die Kühlmittelsumpf-Bauhöhe in der Elektromaschinen-Hochrichtung um ein Überlappmaß zumindest teilweise überlagern, wobei ein Elektromaschinen-Hydraulikkreis bereitgestellt ist, in dem der Kühlmittelsumpf eingebunden ist, von dem an Absaugstellen Kühlmittel mittels zumindest einer Rückführpumpe in einen Kühlmitteltank rückführbar ist. Erfindungsgemäß ist an einer Statorgehäuse-Axialseite ein Querkanal ausgebildet, in den zwei Schwappkanäle münden, wobei der Querkanal die beiden Schwappkanäle miteinander verbindet.

Nachfolgend ist ein Ausführungsbeispiel der Erfindung anhand der beigefügten Figuren beschrieben.

Es zeigen:
- Fig. 1: in einer grob schematischen Schnittdarstellung die Elektromaschine mit zugeordnetem Kühlmittelversorgungssystem;

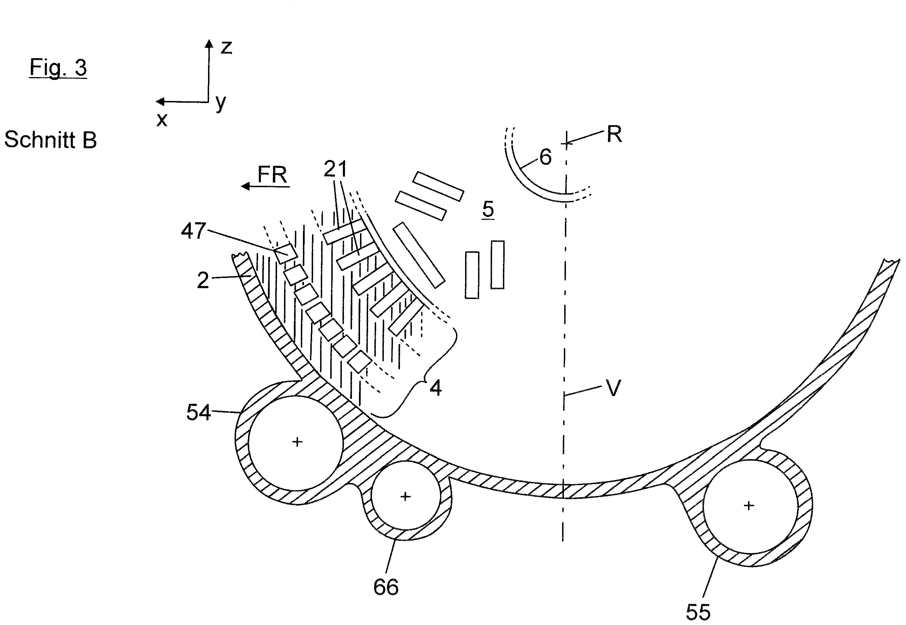

- Fig. 2 bis 4: jeweils unterschiedliche Schnittdarstellungen der Elektromaschine.

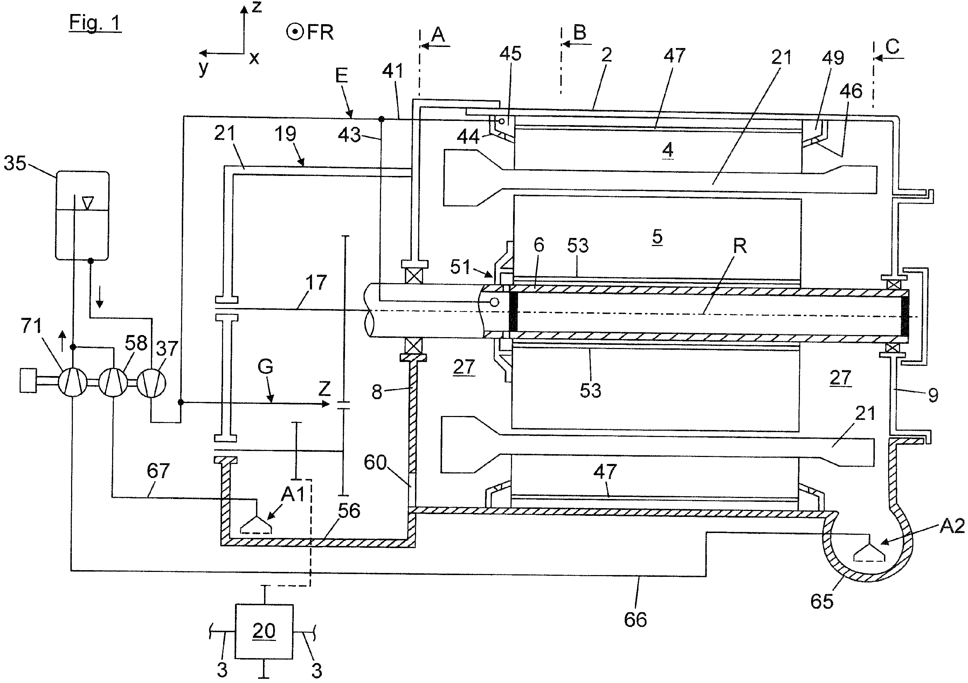

In der Fig. 1 ist eine Antriebsvorrichtung für eine Fahrzeugachse eines zweispurigen Fahrzeugs angedeutet. Die Antriebsvorrichtung weist eine Elektromaschine auf, die im Quereinbau achsparallel zu den, zu den Fahrzeugrädern geführten Flanschwellen 3 angeordnet ist. In einem Statorgehäuse 2 der Elektromaschine ist ein Stator 4 mit einem damit zusammenwirkenden Rotor 5 angeordnet. Die Rotorwelle 6 ist an axial gegenüberliegenden Gehäusewänden 8, 9 des Statorgehäuses 2 in Lageröffnungen drehgelagert. Die Rotorwelle 6 der Elektromaschine ist zum Beispiel über eine Passverzahnung drehfest mit einer Getriebeeingangswelle 17 eines Getriebes 19 verbunden. In der Fig. 1 ist das Getriebe 19 als ein zweistufiges Stirnradgetriebe realisiert, das auf ein Achsdifferential 20 abtreibt. In der Fig. 1 ist das Achsdifferential 20 aus Gründen der Übersichtlichkeit außerhalb eines Getriebegehäuses 21 positioniert. Tatsächlich kann das Achsdifferential 20 zusammen mit dem zweistufigen Stirnradgetriebe innerhalb des Getriebegehäuses 21 positioniert sein.

In der Fig. 1 weist der Stator 4 eine Vielzahl von Statorwicklungen auf, von denen in der Fig. 1 lediglich zwei Statorwicklungen 21 grob angedeutet sind. Jede Statorwicklung 21 weist axial beidseitig jeweils einen Wickelkopf auf, der in einen Wickelkopfraum 27 einragt. Jeder Wickelkopfraum 27 ist in einem später beschriebenen Elektromaschinen-Hydraulikkreis E eingebunden, mit dessen Hilfe der jeweilige Wickelkopfraum 27 mit Kühlmittel beaufschlagbar ist, um die Wickelköpfe des Stators 4 zu kühlen. In jedem der Wickelkopfräume 27 bewegt sich ein Kühlmittel/Luftgemisch in Wirbelströmung um die sich mit hoher Drehzahl drehende Rotorwelle 5.

Wie aus der Figur 1 weiter hervorgeht, weist der Elektromaschinen-Hydraulikkreis E einen Kühlmitteltank 35 auf, der über eine Saugleitung mit einer Saugpumpe 37 verbunden ist. Von der Saugpumpe 37 führt eine Druckleitung zu Kühlmittel-Versorgungsleitungen 41, 43. Mittels der Versorgungsleitung 41 wird Kühlmittel in einen radial äußeren umlaufenden Ringspalt 45 gespeist. Von dort wird das Kühlmittel über radial äußere Statorkanäle 47 zu einem weiteren Ringspalt 49 im rechten Wickelkopfraum 27 geführt. Die beiden Ringspalte 45, 47 sind über Spritzringe 44 vom jeweiligen Wickelkopfraum 27 getrennt. Jede der Spritzringe 44 weist in Umfangsrichtung verteilte Düsen 46 auf, über die Kühlmittel (das heißt Öl) in den jeweiligen Wickelkopfraum 27 einspritzbar ist.

Mittels der Versorgungsleitung 43 wird Kühlmittel durch die Rotorwelle 6 geführt und über eine Strömungsverbindung 51 in radial innere Statorkanäle 53 bis in den rechten Wickelkopfraum 27 geleitet. Zudem wird Kühlmittel ausgehend von der Strömungsverbindung 51 sowie ausgehend von der rechten Mündungsöffnung der radial inneren Statorkanäle 53 nach radial außen in Richtung Wickelköpfe abgeschleudert.

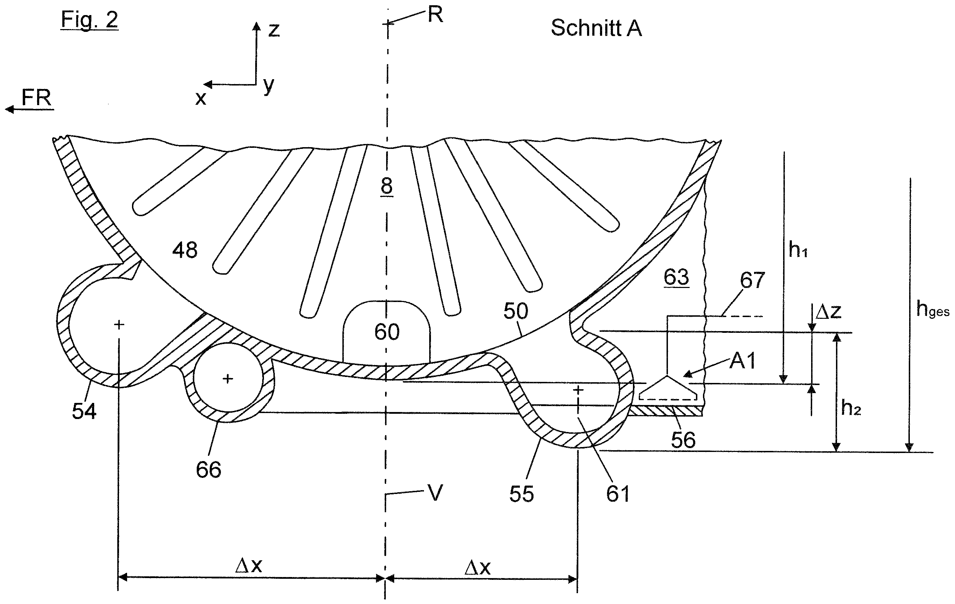

Die beiden Wickelkopfräume 27 sind im Statorgehäuse-Innenraum mittels der Stator-/Rotor-Anordnung voneinander im Wesentlichen kühlmitteldicht getrennt. Um eine Strömungsverbindung zwischen den Wickelkopfräumen 27 bereitzustellen, sind zwei Schwappkanäle 54, 55 (Fig. 2) bereitgestellt, die sich an der Statorgehäuse-Außenseite in Axialrichtung über die gesamte Statorgehäuse-Axiallänge erstrecken. Zur Reduzierung der Gesamt-Bauhöhe h_{ges} ist in der Fig. 2 jeder der beiden Schwappkanäle 54, 55 mit einem Querversatz Δx versetzt zu einer Rotorachsen-Vertikalebene V angeordnet. Auf diese Weise überlagert sich die Statorgehäuse-Bauhöhe h₁ teilweise mit der Schwappkanal-Bauhöhe h₂ in der Elektromaschinen-Hochrichtung z um ein Überlappmaß Δz. Die Gesamt-Bauhöhe h_{ges} reduziert sich daher um das Überlappmaß Δz.

In der Figur 1 ist das Getriebe 19 an der linken Statorgehäuse-Axialseite angeflanscht. Ein Innenraum des Getriebes 19 und ein am Getriebeboden ausgebildeter Getriebe-Sumpf 56 ist in einem Getriebe-Hydraulikkreis G eingebunden. Im Getriebe-Hydraulikkreis G sammelt sich das von Getriebekomponenten ablaufende Kühlmittel an einer getriebeseitigen Absaugstelle A1. Die getriebeseitige Absaugstelle A1 ist über eine Rückführleitung 67 mit einer Getriebe-Rückführpumpe 58 verbunden, die Kühlmittel in den Kühlmitteltank 35 rückführt. Zudem ist in der getriebenahen Gehäuse-Stirnwand 8 des Statorgehäuses 2 ein Kühlmittel-Durchtritt 60 ausgebildet. Dieser verbindet den getriebenahen Wickelkopfraum 27 mit dem Getriebe-Sumpf 56. Der Kühlmittel-Durchtritt 60 ist in der Figur 1 oder 2 in Vertikalflucht zur Rotorachse R positioniert. Zudem ist der in der Fahrtrichtung FR hintere Schwappkanal 55 über eine Kanalöffnung 61 (Figur 2) in direkter Strömungsverbindung mit dem Getriebe-Sumpf 56, während der in der Fahrtrichtung FR vordere Schwappkanal 54 keine direkte Verbindung zum Getriebe-Sumpf 56 aufweist. Die beiden Schwappkanäle 54, 55 sind in der Fig. 2 außerdem an Kühlmittel-Durchtritten 48, 50 mit dem getriebenahen Wickelkopfraum 27 verbunden.

Wie bereits erwähnt, ist in der Figur 1 die Elektromaschine im Quereinbau achsparallel zur Fahrzeugachse verbaut. In der Figur 1 ist die getriebeseitige Absaugstelle A1 auf der linken Fahrzeugseite positioniert, während eine getriebeferne Absaugstelle A2 auf der rechten Fahrzeugseite positioniert ist. Bei einer Fahrzeug-Kurvenfahrt nach links wird das Kühlmittel über die Schwappkanäle 54, 55 fliehkraftbedingt in Richtung rechte Absaugstelle A2 verlagert. Demgegenüber wird bei einer Fahrzeug-Kurvenfahrt nach rechts das Kühlmittel über die Schwappkanäle 54, 55 fliehkraftbedingt in Richtung linke Absaugstelle A1 verlagert. Von daher ist bei Kurvenfahrten das Kühlmittel betriebssicher entweder über die linke Absaugstelle A1 oder über die rechte Absaugstelle A2 in den Kühlmitteltank 35 rückführbar.

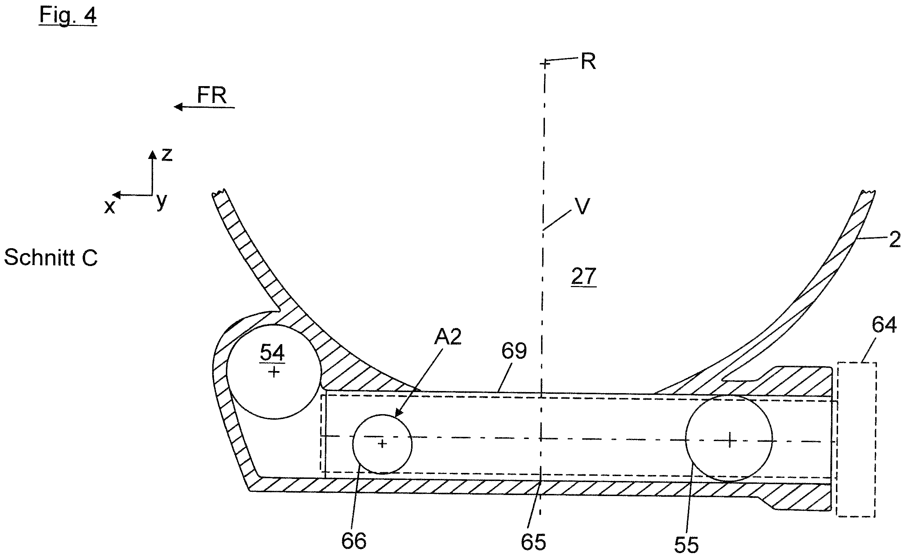

An der getriebefernen Statorgehäuse-Axialseite ist in der Figur 4 am Statorgehäuseboden ein Querkanal 65 ausgebildet, in den die beiden Schwappkanäle 54, 55 sowie die später beschriebene Rückführleitung 66 münden. Der Querkanal 65 stellt eine Strömungsverbindung zwischen den beiden Schwappkanälen 54, 55 und dem getriebefernen Wickelkopfraum 27 her. Hierzu ist der Querkanal 65 an einem Kühlmittel-Durchtritt 69 mit dem getriebefernen Wickelkopfraum 27 verbunden. In den Querkanal 65 ist zudem ein Siebelement 64 einsetzbar, das das durchlaufende Kühlmittel filtert.

In der Fig. 1 sind die Saugpumpe 37, die Getriebe-Rückführpumpe 58 und eine Elektromaschinen-Rückführpumpe 71 Bestandteile einer Mehrfachpumpe (Kombinationspumpe). Bei einer solchen Mehrfachpumpe werden die Einzelpumpen mit einer gemeinsamen Antriebswelle angetrieben. Die gemeinsame Antriebswelle ist wiederum in trieblicher Verbindung mit einem als Antrieb wirkenden Elektromotor. Sämtliche Pumpen 37, 58, 71 sind in der Figur 1 bauraumgünstig an der linken Statorgehäuse-Axialseite positioniert. Die an der pumpenfernen Statorgehäuse-Axialseite angeordnete Absaugstelle A2 ist über die Rückführleitung 66 mit der Elektromaschinen-Rückführpumpe 71 verbunden. Die Rückführleitung 66 ist in den Figuren achsparallel zu den beiden Schwappkanälen 54, 55 ausgerichtet. Das Statorgehäuse 2 kann bevorzugt als ein Gussteil realisiert sein, an dem sowohl die beiden Schwappkanäle 54, 55 als auch die Rückführleitung 66 materialeinheitlich und einstückig angeformt sind.

Um bei unterschiedlichen Fahrbetriebszuständen, das heißt Kurvenfahrt und/oder Steigungsfahrten eine betriebssichere Kühlmittel-Umwälzung zu gewährleisten, ist es bevorzugt, wenn die beiden Absaugstellen A1, A2 mit Bezug auf die Rotorachsen-Vertikalebene V in diagonaler Anordnung positioniert sind. Hierzu ist die getriebeseitige Absaugstelle A1 und die Kanalöffnung 61 des in der Fahrtrichtung FR hinteren Schwappkanals 55 mit Bezug auf die Rotorachsen-Vertikalebene hinten sowie auf der linken Fahrzeugseite angeordnet (Fig. 2). Demgegenüber ist die getriebeferne Absaugstelle A2 (das heißt die getriebeferne Mündungsöffnung der Rückführleitung 66) auf der rechten Fahrzeugseite sowie in der Fahrtrichtung FR (das heißt mit Bezug auf die Rotorachsen-Vertikalebene V) vorne positioniert (Fig. 1 und 4).

### BEZUGSZEICHENLISTE:

- 2: Statorgehäuse
- 3: Flanschwellen
- 4: Stator
- 5: Rotor
- 6: Rotorwelle
- 8, 9: Gehäusewänden
- 17: Getriebeeingangswelle
- 19: Getriebe
- 21: Statorwicklungen
- 27: Wickelkopfraum
- 35: Kühlmitteltank
- 37: Saugpumpe
- 41, 43: Kühlmittel-Versorgungsleitungen
- 44: Kühlmittel-Spritzringe
- 45: Ringspalt
- 46: Düsen
- 47: radial äußere Statorkanäle
- 48: Kühlmittel-Durchtritten
- 49: Ringspalt
- 50: Kühlmittel-Durchtritten
- 51: Strömungsverbindung
- 53: radial innere Statorkanäle
- 54, 55: Schwappkanäle
- 56: Getriebe-Sumpf
- 58: Getriebe-Rückführpumpe
- 59: Elektromaschinen-Rückführpumpe
- 60: Kühlmittel-Durchtritt
- 61: Kanalöffnung
- 63: Getriebe-Innenraum
- 64: Siebelement
- 65: Querkanal
- 66: Rückführleitung
- 67: Rückführleitung
- 69: Kühlmittel-Durchtritt
- 71: Elektromaschinen-Rückführpumpe
- V: Rotorachsen-Vertikalebene
- 54, 55: Schwappkanäle
- R: Rotorachse
- h₁: Statorgehäuse-Bauhöhe
- h₂: Schwappkanal-Bauhöhe
- h_{ges}: Gesamt-Bauhöhe
- Δz: Überlappmaß
- Δx: Querversatz
- E: Elektromaschinen-Hydraulikkreis
- G: Getriebe-Hydraulikkreis
- A1: getriebeseitige Absaugstelle
- A2: getriebeferne Absaugstelle
- R: Rotorachse
- V: Rotorachsen-Vertikalebene
- Z: Zahneingriffsstelle

## Patentansprüche

1. Kühlmittelversorgungssystem für eine Antriebsvorrichtung einer elektrisch betriebenen Fahrzeugachse mit einer Elektromaschine, die ein zylindrisches Statorgehäuse (2) aufweist, in dem sich axial beidseitig einer Rotor-/Stator-Anordnung ein Wickelkopfraum (27) befindet, an dessen Boden sich Kühlmittel sammelt, wobei die beiden Wickelkopfräume (27) über einen Kühlmittelsumpf (54, 55) miteinander strömungstechnisch verbunden sind, und
wobei sich die Statorgehäuse-Bauhöhe (h₁) sowie die Kühlmittelsumpf-Bauhöhe (h₂) in der Elektromaschinen-Hochrichtung (z) zu einer Gesamt-Bauhöhe (h_{ges}) aufaddieren, und
wobei zur Reduzierung der Gesamt-Bauhöhe (h_{ges}) der Kühlmittelsumpf (54, 55) um einen Querversatz (Δx) von einer Rotorachsen-Vertikalebene (V) versetzt ist, so dass sich die Statorgehäuse-Bauhöhe (h₁) und die Kühlmittelsumpf-Bauhöhe (h₂) in der Elektromaschinen-Hochrichtung (z) um ein Überlappmaß (Δz) zumindest teilweise überlagern, und
wobei die Elektromaschine im Quereinbau achsparallel zur Fahrzeugachse verbaut ist,
**dadurch gekennzeichnet,**
**dass** der Kühlmittelsumpf aufgeteilt ist in zwei Schwappkanäle (54, 55), die jeweils mit Querversatz (Δx) versetzt beidseitig der Rotorachsen-Vertikalebene (V) angeordnet sind, und
**dass** bei einer Fahrzeug-Bergauffahrt ein in Fahrtrichtung (FR) hinterer Schwappkanal (55) ein querkraftbedingtes Überströmen von Kühlmittel zwischen den Wickelkopfräumen (27) gewährleistet, oder
bei einer Fahrzeug-Bergabfahrt ein in Fahrtrichtung (FR) vorderer Schwappkanal (54) ein querkraftbedingtes Überströmen von Kühlmittel zwischen den Wickelkopfräumen (27) gewährleistet.

2. Kühlmittelversorgungssystem nach Anspruch 1, **dadurch gekennzeichnet, dass** sich der Kühlmittelsumpf (54, 55) in der Statorgehäuse-Axialrichtung durchgängig über die gesamte Statorgehäuse-Axiallänge erstreckt.

3. Kühlmittelversorgungssystem nach Anspruch 1 oder 2, **dadurch gekennzeichnet, dass** ein Elektromaschinen-Hydraulikkreis (E) bereitgestellt ist, in dem der Kühlmittelsumpf (54, 55) eingebunden ist, von dem an Absaugstellen (A1, A2) Kühlmittel mittels zumindest einer Rückführpumpe (58, 71) in einen Kühlmitteltank (35) rückführbar ist.

4. Kühlmittelversorgungssystem nach Anspruch 1, 2 oder 3, **dadurch gekennzeichnet, dass** eine erste, bevorzugt getriebenahe Absaugstelle (A1) auf der einen Fahrzeugseite positioniert ist und eine zweite, bevorzugt getriebeferne Absaugstelle (A2) auf der anderen Fahrzeugseite positioniert ist, und dass insbesondere bei einer Fahrzeug-Kurvenfahrt nach links sich das Kühlmittel im Kühlmittelsumpf (54, 55) fliehkraftbedingt in Richtung rechte Absaugstelle (A2) verlagert, oder bei einer Kurvenfahrt nach rechts sich das Kühlmittel im Kühlmittelsumpf (54, 55) fliehkraftbedingt in Richtung linke Absaugstelle (A1) verlagert, so dass bevorzugt bei Kurvenfahrten das Kühlmittel betriebssicher entweder an der ersten oder zweiten Absaugstelle (A1, A2) in den Kühlmitteltank (35) rückführbar ist.

5. Kühlmittelversorgungssystem nach einem der vorhergehenden Ansprüche, **dadurch gekennzeichnet, dass** in der Antriebsvorrichtung die Elektromaschine über ein Getriebe (19) auf, zu den Fahrzeugrädern geführte Flanschwellen (3) abtreibt, und dass ein Getriebe-Hydraulikkreis (G) bereitgestellt ist, in dem ein Getrieberaum (63) und ein am Getriebeboden ausgebildeter Getriebe-Sumpf (56) eingebunden ist, in dem sich das von Getriebekomponenten ablaufende Kühlmittel an einer getriebeseitigen Absaugstelle (A1) sammelt, von der das Kühlmittel mit einer Getriebe-Rückführpumpe (58) in den Kühlmitteltank (35) rückführbar ist, und dass insbesondere das Getriebe (19) an einer Statorgehäuse-Axialseite angeordnet ist.

6. Kühlmittelversorgungssystem nach Anspruch 5, **dadurch gekennzeichnet, dass** eine getriebenahe Stirnwand (8) des Statorgehäuses (2) einen Kühlmittel-Durchtritt (60) aufweist, der den getriebenahen Wickelkopfraum (27) mit dem Getriebe-Sumpf (56) verbindet, so dass die getriebeseitige Absaugstelle (A1) in Doppelfunktion nicht nur das sich im Getriebe-Sumpf (56) sammelnde Kühlmittel, sondern auch das vom Statorgehäuse (2) übergeleitete Kühlmittel absaugt, und dass insbesondere der Kühlmittel-Durchtritt (60) in Vertikalflucht zur Rotorachse (R) positioniert ist, und/oder dass die Schwappkanäle (54, 55) über Kühlmittel-Durchtritte (48, 50, 69) mit dem jeweiligen Wickelkopfraum (27) verbunden sind, und/oder dass insbesondere zumindest einer der Schwappkanäle (54, 55) über eine Kanalöffnung (61) mit dem Getriebe-Sumpf (56) verbunden ist.

7. Kühlmittelversorgungssystem nach einem der vorhergehenden Ansprüche, **dadurch gekennzeichnet, dass** die Rückführpumpen (58, 71) an einer gemeinsamen Statorgehäuse-Axialseite angeordnet sind, und dass die an einer pumpenfernen Axialseite angeordnete Absaugstelle (A2) über eine Rückführleitung (66) mit einer Elektromaschinen-Rückführpumpe (71) verbunden ist, und/oder dass der mit der Kanalöffnung (61) ausgebildete Schwappkanal (55) und die getriebeseitige Absaugstelle (A1) mit Bezug auf die Rotorachsen-Vertikalebene (V) auf der gleichen Seite positioniert sind, und/oder dass die getriebeferne bzw. pumpenferne Absaugstelle (A2) und der nicht mit dem Getriebe-Sumpf (56) verbundene Schwappkanal (54) auf der gegenüberliegenden Seite der Rotorachsen-Vertikalebene (V) angeordnet sind, so dass insbesondere die beiden Absaugstellen (A1, A2) mit Bezug auf die Rotorachsen-Vertikalebene (V) in diagonaler Anordnung positioniert sind.

8. Kühlmittelversorgungssystem nach einem der vorhergehenden Ansprüche, **dadurch gekennzeichnet, dass** an einer Statorgehäuse-Axialseite, insbesondere der getriebefernen Statorgehäuse-Axialseite, ein Querkanal (65) ausgebildet ist, in den die beiden Schwappkanäle (54, 55) sowie bevorzugt die Rückführleitung (66) mündet, und dass der Querkanal (65) die beiden Schwappkanäle (54, 55) miteinander verbindet, und dass insbesondere der Querkanal (65) an einem Kühlmittel-Durchtritt (69) mit dem Wickelkopfraum (27) verbunden ist.

9. Kühlmittelversorgungssystem nach Anspruch 8, **dadurch gekennzeichnet, dass** in den Querkanal (65) ein Siebelement (64) einsetzbar ist, das das durchlaufende Kühlmittel filtert.

10. Kühlmittelversorgungssystem für eine Antriebsvorrichtung einer elektrisch betriebenen Fahrzeugachse mit einer Elektromaschine, die ein zylindrisches Statorgehäuse (2) aufweist, in dem sich axial beidseitig einer Rotor-/Stator-Anordnung ein Wickelkopfraum (27) befindet, an dessen Boden sich Kühlmittel sammelt,
wobei die beiden Wickelkopfräume (27) über einen Kühlmittelsumpf (54, 55) miteinander strömungstechnisch verbunden sind, und wobei sich die Statorgehäuse-Bauhöhe (h₁) sowie die Kühlmittelsumpf-Bauhöhe (h₂) in der Elektromaschinen-Hochrichtung (z) zu einer Gesamt-Bauhöhe (h_{ges}) aufaddieren, und
wobei zur Reduzierung der Gesamt-Bauhöhe (h_{ges}) der Kühlmittelsumpf (54, 55) um einen Querversatz (Δx) von einer Rotorachsen-Vertikalebene (V) versetzt ist, so dass sich die Statorgehäuse-Bauhöhe (h₁) und die Kühlmittelsumpf-Bauhöhe (h₂) in der Elektromaschinen-Hochrichtung (z) um ein Überlappmaß (Δz) zumindest teilweise überlagern, wobei ein Elektromaschinen-Hydraulikkreis (E) bereitgestellt ist, in dem der Kühlmittelsumpf (54, 55) eingebunden ist, von dem an Absaugstellen (A1, A2) Kühlmittel mittels zumindest einer Rückführpumpe (58, 71) in einen Kühlmitteltank (35) rückführbar ist,
**dadurch gekennzeichnet,**
**dass** der Kühlmittelsumpf aufgeteilt ist in zwei Schwappkanäle (54, 55), die jeweils mit Querversatz (Δx) versetzt beidseitig der Rotorachsen-Vertikalebene (V) angeordnet sind, und
**dass** an einer Statorgehäuse-Axialseite ein Querkanal (65) ausgebildet ist, in den die zwei Schwappkanäle (54, 55) münden, und
**dass** der Querkanal (65) die beiden Schwappkanäle (54, 55) miteinander verbindet.

## Claims

1. Coolant supply system for a drive device of an electrically operated vehicle axle, having an electric machine which has a cylindrical stator housing (2) in which is situated, axially on both sides of a rotor/stator assembly, a winding overhang space (27) on the base of which coolant accumulates, wherein the two winding overhang spaces (27) are fluidically connected to one another by way of a coolant sump (54, 55); and wherein the stator housing construction height (h1) and the coolant sump construction height (h2) add up in the electric machine height direction (z) so as to form an overall construction height (hges); and wherein for reducing the overall construction height (hges) the coolant sump (54, 55) is offset from a rotor axis vertical plane (V) by a transverse offset (Δx) in such a way that the stator housing construction height (h1) and the coolant sump construction height (h2) at least partially overlap one another in the electric machine height direction (z) by an overlapping dimension (Δz); and
wherein the electric machine when installed transversely is installed so as to be axially parallel to the vehicle axle,
**characterized in that**
the coolant sump is divided into two slosh ducts (54, 55) which are disposed on both sides of the rotor axis vertical plane (V), each being offset by a transverse offset (Δx); and
**in that** during uphill travel of the vehicle a slosh duct (55), which is at the rear in the direction of travel (FR) guarantees a lateral force-related crossflow of coolant between the winding overhang spaces (27); or during downhill travel of the vehicle a slosh duct (54), which is at the front in the direction of travel (FR), guarantees a lateral force-related crossflow of coolant between the winding overhang spaces (27).

2. Coolant supply system according to Claim 1,
**characterized in that**
the coolant sump (54, 55) in the stator housing axial direction extends continuously over the entire stator housing axial length.

3. Coolant supply system according to Claim 1 or 2,
**characterized in that**
provided is an electric machine hydraulic circuit (E) in which the coolant sump (54, 55) is incorporated and from which, at suction points (A1, A2), coolant is able to be returned into a coolant tank (35) by means of at least one recirculating pump (58, 71).

4. Coolant supply system according to Claim 1, 2, or 3,
**characterized in that**
a first, preferably transmission-proximal, suction point (A1) is positioned on the one vehicle side, and a second, preferably transmission-distal, suction point (A2) is positioned on the other vehicle side, and **in that**, in particular while the vehicle negotiates curves towards the left, the coolant in the coolant sump (54, 55), due to the centrifugal force, is displaced in the direction of the right-hand suction point (A2) or, while the vehicle negotiates curves towards the right, the coolant in the coolant sump (54, 55), due to the centrifugal force, is displaced in the direction of the left-hand suction point (A1), in such a way that, preferably when negotiating curves, the coolant is able to be returned in an operationally reliable manner into the coolant tank (35) either at the first or the second suction point (A1, A2).

5. Coolant supply system according to one of the preceding claims, **characterized in that**
in the drive device the electric machine outputs by way of a transmission (19) to flange shafts (3) leading to the vehicle wheels, and **in that** provided is a transmission hydraulic circuit (G) in which are incorporated a transmission space (63) and a transmission sump (56) which is formed on the transmission base, and in which the coolant flowing from the transmission components accumulates on a transmission-proximal suction point (A1) from where the coolant is able to be returned into the coolant tank (35) by a transmission recirculating pump (58), and **in that** in particular the transmission (19) is disposed on a stator housing axial side.

6. Coolant supply system according to Claim 5,
**characterized in that**
a transmission-proximal end wall (8) of the stator housing (2) has a coolant passage (60) which connects the transmission-proximal winding overhang space (27) to the transmission sump (56) in such a way that the transmission-proximal suction point (A1) in the form of a dual function suctions not only the coolant accumulating in the transmission sump (56) but also the coolant transferred from the stator housing (2), and **in that** in particular the coolant passage (60) is positioned so as to be vertically co-aligned with the rotor axis (R), and/or **in that** the slosh ducts (54, 55) are connected to the respective winding overhang space (27) by way of coolant passages (48, 50, 69), and/or **in that** in particular at least one of the slosh ducts (54, 55) is connected to the transmission sump (56) by way of a duct opening (61).

7. Coolant supply system according to one of the preceding claims, **characterized in that**
the recirculating pumps (58, 71) are disposed on a common stator housing axial side, and **in that** the suction point (A2) disposed on a pump-distal axial side is connected to an electric machine recirculating pump (71) by way of a return line (66), and/or **in that** the slosh duct (55) designed with the duct opening (61) and the transmission-proximal suction point (A1) are positioned on the same side in terms of the rotor axis vertical plane (V), and/or **in that** the transmission-distal or pump-distal suction point (A2) and the slosh duct (54) not connected to the transmission sump (56) are disposed on the opposite side of the rotor axis vertical plane (V), so that in particular the two suction points (A, A2) are positioned in a diagonal arrangement in terms of the rotor axis vertical plane (V).

8. Coolant supply system according to one of the preceding claims, **characterized in that**
formed on a stator housing axial side, in particular the transmission-distal stator housing axial side, is a transverse duct (65) into which the two slosh ducts (54, 55), and preferably the return line (66), open, and **in that** the transverse duct (65) connects the two slosh ducts (54, 55) to one another, and **in that** in particular the transverse duct (65) is connected to the winding overhang space (27) at a coolant passage (69).

9. Coolant supply system according to Claim 8,
**characterized in that**
a sieve element (64), which filters the coolant passing through, is insertable into the transverse duct (65).

10. Coolant supply system for a drive device of an electrically operated vehicle axle, having an electric machine which has a cylindrical stator housing (2) in which is situated, axially on both sides of a rotor/stator assembly, a winding overhang space (27) on the base of which coolant accumulates, wherein the two winding overhang spaces (27) are fluidically connected to one another by way of a coolant sump (54, 55); and wherein the stator housing construction height (h1) and the coolant sump construction height (h2) add up in the electric machine height direction (z) so as to form an overall construction height (hges); and wherein for reducing the overall construction height (hges) the coolant sump (54, 55) is offset from a rotor axis vertical plane (V) by a transverse offset (Δx) in such a way that the stator housing construction height (h1) and the coolant sump construction height (h2) at least partially overlap one another in the electric machine height direction (z) by an overlapping dimension (Δz);
wherein provided is an electric machine hydraulic circuit (E) in which the coolant sump (54, 55) is incorporated and from which, at suction points (A1, A2), coolant is able to be returned into a coolant tank (35) by means of at least one recirculating pump (58, 71),
**characterized in that**
the coolant sump is divided into two slosh ducts (54, 55) which are disposed on both sides of the rotor axis vertical plane (V), each being offset by a transverse offset (Δx); and
formed on a stator housing axial side is a transverse duct (65) into which the two slosh ducts (54, 55) open; and
**in that** the transverse duct (65) connects the two slosh ducts (54, 55) to one another.

## Revendications

1. Système d'alimentation en agent de refroidissement destiné à un dispositif d'entraînement d'un essieu de véhicule à commande électrique comprenant une machine électrique qui comporte un boîtier de stator cylindrique (2), dans lequel un espace de tête d'enroulement (27), au fond duquel s'accumule l'agent de refroidissement, est situé axialement des deux côtés d'un ensemble rotor-stator, les deux espaces de tête d'enroulement (27) étant reliés fluidiquement l'un à l'autre par le biais d'un carter d'agent de refroidissement (54, 55), et
la hauteur de boîtier de stator (h1) et la hauteur de carter d'agent de refroidissement (h2) s'ajoutant pour donner une hauteur totale (hges) dans la direction verticale (z) de la machine électrique, et
afin de réduire la hauteur totale (hges), le carter d'agent de refroidissement (54, 55) étant décalé d'un décalage transversal ( x) par rapport au plan vertical (V) de l'axe du rotor, de sorte que la hauteur de boîtier de stator (h1) et la hauteur de carter d'agent de refroidissement (h2) se superposant au moins partiellement dans la direction verticale (z) de la machine électrique sur une étendue de superposition ( z), et
la machine électrique étant installée transversalement et parallèlement à l'essieu du véhicule,
**caractérisé en ce que**
le carter d'agent de refroidissement est divisé en deux canaux de débordement (54, 55), qui sont chacun disposés avec un décalage transversal ( x) des deux côtés du plan vertical (V) de l'axe du rotor, et dans le cas d'une conduite de véhicule en montée, un canal de débordement arrière (55) par référence au sens de conduite (FR) assure un débordement d'agent de refroidissement entre les espaces de tête d'enroulement (27) en raison de forces transversales, ou
dans le cas d'une conduite de véhicule en descente, un canal de débordement avant (54) par référence au sens de conduite (FR) assure un débordement d'agent de refroidissement entre les espaces de tête d'enroulement (27) en raison de forces transversales.

2. Système d'alimentation en agent de refroidissement selon la revendication 1, **caractérisé en ce que** le carter d'agent de refroidissement (54, 55) s'étend de manière continue dans la direction axiale du boîtier de stator sur toute la longueur axiale du boîtier de stator.

3. Système d'alimentation en agent de refroidissement selon la revendication 1 ou 2, **caractérisé en ce qu'**un circuit hydraulique de machine électrique (E) est fourni, dans lequel le carter d'agent de refroidissement (54, 55) est intégré, et qui permet de ramener au niveau de points d'aspiration (A1, A2) l'agent de refroidissement jusque dans un réservoir d'agent de refroidissement (35) au moyen d'au moins une pompe de retour (58, 71).

4. Système d'alimentation en agent de refroidissement selon la revendication 1, 2 ou 3, **caractérisé en ce qu'**un premier point d'aspiration (A1), de préférence proche de la transmission, est positionné sur un côté du véhicule et un deuxième point d'aspiration (A2), de préférence éloigné de la transmission, est positionné sur l'autre côté du véhicule, et **en ce que**, en particulier lors d'un virage à gauche du véhicule, l'agent de refroidissement dans le carter d'agent de refroidissement (54, 55) se déplace vers le point d'aspiration droit (A2) sous l'effet de la force centrifuge, ou lors d'un virage à droite, l'agent de refroidissement dans le carter d'agent de refroidissement (54, 55) se déplace vers le point d'aspiration gauche (A1) sous l'effet de la force centrifuge, de sorte que, de préférence dans les virages, l'agent de refroidissement puisse être ramené en toute sécurité dans le réservoir d'agent de refroidissement (35) au niveau du premier ou du deuxième point d'aspiration (A1, A2).

5. Système d'alimentation en agent de refroidissement selon l'une des revendications précédentes, **caractérisé en ce que**, dans le dispositif d'entraînement, la machine électrique entraîne, par le biais d'une transmission (19), des faux arbres (3) menant aux roues du véhicule, et **en ce qu'**un circuit hydraulique de transmission (G) est fourni dans lequel sont intégrés un espace de transmission (63) et un carter de transmission (56) formé sur le fond de transmission, dans lequel l'agent de refroidissement s'écoulant des composants de transmission s'accumule au niveau d'un point d'aspiration côté de transmission (A1), qui permet de ramener l'agent de refroidissement jusque dans le réservoir d'agent de refroidissement (35) à l'aide d'une pompe de retour de transmission (58), et **en ce qu'**en particulier la transmission (19) est disposée sur un côté axial du boîtier de stator.

6. Système d'alimentation en agent de refroidissement selon la revendication 5, **caractérisé en ce qu'**une paroi frontale (8) du boîtier de stator (2) qui est proche de la transmission comporte un passage d'agent de refroidissement (60) qui relie l'espace de tête d'enroulement (27) proche de la transmission au carter de transmission (56), de sorte que le point d'aspiration côté transmission (A1) aspire dans une double fonction non seulement l'agent de refroidissement qui s'accumule dans le carter de transmission (56), mais également l'agent de refroidissement qui est transféré depuis le boîtier de stator (2), et **en ce qu'**en particulier le passage d'agent de refroidissement (60) est positionné en alignement vertical avec l'axe de rotor (R), et/ou **en ce que** les canaux de débordement (54, 55) sont reliés à l'espace de tête d'enroulement respectif (27) par le biais de passages d'agent de refroidissement (48, 50, 69), et/ou **en ce qu'**en particulier au moins un des canaux de débordement (54, 55) est relié au carter de transmission (56) par le biais d'une ouverture de canal (61).

7. Système d'alimentation en agent de refroidissement selon l'une des revendications précédentes, **caractérisé en ce que** les pompes de retour (58, 71) sont disposées sur un côté axial commun du boîtier de stator, et **en ce que** le point d'aspiration (A2) disposé sur un côté axial éloigné des pompes est relié à une pompe de retour de machine électrique (71) par le biais d'une conduite de retour (66), et/ou **en ce que** le canal de débordement (55) formé avec l'ouverture de canal (61) et le point d'aspiration côté transmission (A1) sont positionnés du même côté par rapport au plan vertical (V) de l'axe de rotor, et/ou **en ce que** le point d'aspiration (A2) éloigné de la transmission ou des pompes et le canal de débordement (54) qui n'est pas relié au carter de transmission (56) sont disposés du côté opposé du plan vertical (V) de l'axe de rotor, de sorte qu'en particulier les deux points d'aspiration (A1, A2) sont positionnés en diagonale par rapport au plan vertical (V) de l'axe de rotor.

8. Système d'alimentation en agent de refroidissement selon l'une des revendications précédentes, **caractérisé en ce que** sur un côté axial du boîtier de stator, en particulier du côté axial du boîtier de stator qui est éloigné de la transmission, est formé un canal transversal (65) dans lequel débouchent les deux canaux de débordement (54, 55) et de préférence la conduite de retour (66), et **en ce que** le canal transversal (65) relie les deux canaux de débordement (54, 55) entre eux, et **en ce qu'**en particulier le canal transversal (65) est relié à l'espace de tête d'enroulement (27) au niveau d'un passage d'agent de refroidissement (69).

9. Système d'alimentation en agent de refroidissement selon la revendication 8, **caractérisé en ce qu'**un élément formant tamis (64), qui filtre l'agent de refroidissement qui le traverse, peut être inséré dans le canal transversal (65).

10. Système d'alimentation en agent de refroidissement destiné à un dispositif d'entraînement d'un essieu de véhicule à commande électrique comprenant une machine électrique qui comporte un boîtier de stator cylindrique (2), dans lequel un espace de tête d'enroulement (27), au fond duquel s'accumule l'agent de refroidissement, est situé axialement des deux côtés d'un ensemble rotor-stator,
les deux espaces de tête d'enroulement (27) étant reliés fluidiquement l'un à l'autre par le biais d'un carter d'agent de refroidissement (54, 55), et
la hauteur de boîtier de stator (h1) et la hauteur de carter d'agent de refroidissement (h2) s'ajoutant pour donner une hauteur totale (hges) dans la direction verticale (z) de la machine électrique, et
afin de réduire la hauteur totale (hges), le carter d'agent de refroidissement (54, 55) étant décalé d'un décalage transversal ( x) par rapport au plan vertical (V) de l'axe du rotor, de sorte que la hauteur de boîtier de stator (h1) et la hauteur de carter d'agent de refroidissement (h2) se superposent au moins partiellement dans la direction verticale (z) de la machine électrique sur une étendue de superposition ( z), et
un circuit hydraulique de machine électrique (E) étant fourni, dans lequel le carter d'agent de refroidissement (54, 55) est intégré, et qui permet de ramener au niveau de points d'aspiration (A1, A2) l'agent de refroidissement jusque dans un réservoir d'agent de refroidissement (35) au moyen d'au moins une pompe de retour (58, 71),
**caractérisé en ce que**
le carter d'agent de refroidissement est divisé en deux canaux de débordement (54, 55), qui sont chacun disposés avec un décalage transversal ( x) des deux côtés du plan vertical (V) de l'axe du rotor, et
un canal transversal (65), dans lequel débouchent les deux canaux de débordement (54, 55), est formé sur un côté axial du boîtier de stator et le canal transversal (65) relie les deux canaux de débordement (54, 55) entre eux.
